## Europäisches Patentamt
## European Patent Office
## Office européen des brevets

(19)

(11) Veröffentlichungsnummer: **0 025 494**
**B2**

(12) **NEUE EUROPÄISCHE PATENTSCHRIFT**

(45) Veröffentlichungstag der neuen Patentschrift:
**19.11.87**

(51) Int. Cl.⁴: **C 09 H 3/00, A 23 J 1/10**

(21) Anmeldenummer: **80104387.8**

(22) Anmeldetag: **25.07.80**

(54) Verfahren zur Herstellung von Gelatine.

(30) Priorität: **12.09.79 DE 2936835**

(43) Veröffentlichungstag der Anmeldung:
**25.03.81 Patentblatt 81/12**

(45) Bekanntmachung des Hinweises auf die Patenterteilung:
**16.02.83 Patentblatt 83/7**

(45) Bekanntmachung des Hinweises auf die Entscheidung
über den Einspruch:
**19.11.87 Patentblatt 87/47**

(84) Benannte Vertragsstaaten:
**BE CH FR GB IT LI NL SE**

(56) Entgegenhaltungen:
DE - C - 689 748
FR - A - 881 936
FR - A - 1 314 669

The Journal of Photographic Science, Vol. 23, 1975,
Seiten 97 - 103
I. Tomka: "Stand der Forschung an der
photographischen Gelatine", Chimia 30 (1976), Nr. 12,
Seiten 534 - 540
R.J. Croome: "The Kinitics of the Development of
Rigidity in Gelatin Gels", The Journal of Photographic
Science, 22 (2974), Seiten 239 - 246.
P. Frey und H. Nitschmann: "Der Einfluss von
D-Aminosäureresten auf das konformative Verhalten
von Kollagenpeptiden", Helvetia Chimia Acta, 39
(1976), Nr. 149, Seiten 1401 - 1409
J. Pouradier et al, J. Ch. Phy., 49 (1952), "Contribution à
l'étude de la Structure des Gélatines";
Viskosität/Molekularmasse-Kurven.

(73) Patentinhaber: **Deutsche Gelatine-Fabriken Stoess &
Co.GmbH, Postfach 100 Gammelsbacher Strasse 2,
D-6930 Eberbach (DE)**

(72) Erfinder: **Graesser, Wolfgang, Talstrasse 27,
D-6935 Waldbrunn 4 (DE)**
Erfinder: **Koepff, Peter Jörg, Dipl.-Ing., Bergstrasse 142,
D-6900 Heidelberg (DE)**
Erfinder: **Tomka, Ivan, Dr., Chalet du Breitfeld,
CH-1722 Bourguillon (CH)**

(74) Vertreter: **Hoeger, Stellrecht & Partner,
Uhlandstrasse 14c, D-7000 Stuttgart 1 (DE)**

(56) Entgegenhaltungen: (Fortsetzung)
"The Science and Technology of Gelatin", Wad &
Courts, Academic Press London, 1977, Kapitel 10, Seite
316
G. Stainsby: "Recent Advances in Gelatin and Glue
Research", Pergamon Press, 1958, darin D. Fysh: "The
Influence of the Mode of Preparation on the physical
properties of Gelatin", Seite 142
A. Lindquist: "The Manufacture of Gelatin",
B.F.M.I.R.A., Gelatin and Gelling agents, Proceedings of
a Symposium held in London, 20th Oct., 1971,
Symposium Proceedings No. 13, Aug. 1972, Seite 32
M. Loncin: "Die Grundlagen der Verfahrenstechnik in
der Lebensmittelindustrie", Verlag Sauerländer, Aaran
und Frankfurt/M., 1969, Seite 491
S. Gross and P.I. Rose, J. Phot. Sci. 23, 33 (1975)
"Wenn's um Gelatine geht", Deutscher
Gelatine-Verbraucherdienst, Dipl.-Chem. H.E.
Wunderlich, (1972), SEiten 15, 49, 75, 77
Ullmanns Enzyklopädie der Technischen Chemie (1969)
Seiten 630-642

**Beschreibung**

Die vorliegende Erfindung betrifft ein Verfahren zur Herstellung einer Gelatine nach dem Oberbegriff des Patentanspruchs 1.

Gelatine ist bekanntlich ein gereinigtes Protein, welches durch partielle Hydrolyse aus dem Skleroprotein (Gerüsteiweiss) Kollagen gewonnen wird. Aufgrund der Verschiedenartigkeit der in der Gelatineproduktion eingesetzten Rohstoffe, nämlich Hautmaterial von Rindern und Kälbern, Schweineschwarten und Ossein (entmineralisierte, meist zerkleinerte Knochen), sowie der technologisch sehr unterschiedlichen Herstellungsverfahren variiert die gewonnene Gelatine in ihren chemischen und physikalischen Eigenschaften erheblich.

Gewöhnlich wird das Rohmaterial einem alkalischen Aufschluss, z.B. mittels Kalkmilch oder Natronlauge, unterworfen (sog. «Äscherung») und anschliessend in einer im wesentlichen neutralen Lösung ausgeschmolzen. Daneben ist auch das sog. «saure Aufschlussverfahren» bekannt, bei dem die alkalische Vorbehandlung entfällt und in saurem Medium ausgeschmolzen wird. Die jeweils anfallenden Gelatinelösungen werden filtriert, konzentriert und getrocknet. Einzelheiten der Gelatineherstellungsverfahren sind z.B. aus G. Reich «Kollagen» 1966, S. 242 ff, Verlag Theodor Steinkopff, Dresden und A.G. Ward und A. Courts «Science and Technology of Gelatin» 1977, Academic Press, bekannt.

Die Eigenschaften der so gewonnenen Gelatine hängen im weitem Masse vom verwendeten Rohmaterial, vom gewählten Aufschlussverfahren und besonders stark von den Reaktionsbedingungen während des Aufschlusses, der Extraktion und der Trocknung ab. Die Methoden der Gelatineherstellung und die Erzielung bestimmter gewünschter Eigenschaften beruhen zu einem grossen Teil auf empirischer Erfahrung. Man erreicht damit zwar einen beachtlichen Grad von Reproduzierbarkeit. Es hat sich allerdings gezeigt, dass Gelatinen, welche für die Herstellung photographischer Produkte verwendet werden, stets im praktischen Versuch getestet werden müssen. Andernfalls wäre es nicht möglich, photographische Materialien mit der erforderlichen Gleichmässigkeit herzustellen.

Hauptbestandteil der Rohmaterialien ist das sog. Tropokollagen, ein wohldefiniertes Proteinmolekül, welches aus zwei identischen $\alpha_1$-Ketten und einer davon etwas abweichenden $\alpha_2$-Kette besteht, welche in der Nähe ihrer N-terminalen Aminosäure miteinander verknüpft sind. Die Aminosäure der $\alpha_1$-Kette ist für den Fall des Kalbshaut-Kollagens genau bekannt; das Polypeptid besteht aus einer linearen Kette von 1052 Aminosäuren. Siehe dazu P.I. Rose & S. Gross «Photographic Gelatine» (Herausg. R.J. Cox), S. 89, Academic Press 1976.

Gelatine besteht aus einem Gemisch verschiedener Bruchstücke des Tropokollagens, die beim sauren oder alkalischen Abbau entstehen. Man unterscheidet als Hauptbestandteile die vier folgenden Fraktionen, die je nach Herkunft der Gelatine in verschiedenen Mengenverhältnissen vorliegen:

1. $\alpha$-Gelatine: Intakte $\alpha$-Polypeptidketten Molekulargewicht $9,5 \cdot 10^4$.

2. Oligomere der $\alpha$-Kette, bestehend aus 2 bis 15 verknüpften $\alpha$-Ketten Molekulargewicht $10^5$–$10^6$.

3. «Mikrogel»: Polymere von bis zu 1000 verknüpften $\alpha$-Ketten Molekulargewicht $10^7$–$10^8$.

4. «Peptide»: Verschieden grosse Spalsstücke der $\alpha$-Kette Molekulargewicht 1 bis $9 \cdot 10^4$.

Eine typische Zusammensetzung herkömmlicher Gelatinesorten, welche durch alkalische Vorbehandlung des Rohmaterials und anschliessende Extraktion mit Wasser bei etwa 45° bis 60°C gewonnen werden, ist in der folgenden Tabelle 1 angegeben.

Tabelle 1

| Bezeichnung der Komponenete | Molmasse | Gehalt (Gew.%) |
|---|---|---|
| Mikrogel | $10^7$–$10^8$ | 0–15 |
| Oligomere der $\alpha$-Gelatine | $10^5$–$10^6$ | 10–30 |
| $\alpha$-Gelatine | $9,5 \cdot 10^4$ | 10–40 |
| Bruchstücke der $\alpha$-Gelatine (Peptide) | $10^4$–$9 \cdot 10^4$ | 30–80 |

Siehe dazu A. Veis, «The Macromolecular Chemistry of Gelatin», Academic Press 1978, ferner I. Tomka, Chimia 30, 534 ff. (1976 No. 12). Die Zerlegung der Gelatine in die verschiedenen Fraktionen wurde von I. Tomka et al. in J. Phot. Sci., 23, 97 (1975) eingehend beschrieben.

Es hat sich inzwischen gezeigt, dass die vier Hauptfraktionen der Gelatine deren physikalische Eigenschaften und Verwendbarkeit in ganz unterschiedlicher Art bestimmen:

Wertvollster Bestandteil sind die $\alpha$-Fraktion und deren Oligomere bis zu einer Grösse von ca. 10–15 $\alpha$-Einheiten. Dank der speziellen Konfiguration in der Aminosäuresequenz sind sie weitgehend bestimmend für die Erstarrungseigenschaften der Gelatinelösungen. Lösungen dieser Fraktionen besitzen wegen des nach oben begrenzten Molekulargewichts eine niedrige bis mittlere Viskosität, wie sie für die Herstellung photographischer Schichten vielfach erwünscht ist.

Die als «Mikrogel» bezeichnete Fraktion mit höchstem Molekulargewicht trägt erfahrungsgemäss wegen ihres ohnehin geringen Anteils nicht viel zur Netzstruktur der gelierten Gelatine bei und vermag insbesondere nicht, die Erstarrungsgeschwindigkeit wesentlich zu beeinflussen. Wegen ihres teilweise extrem hohen Molekulargewichts ist diese Fraktion jedoch in starkem Masse für die Viskosität der wässerigen Gelatinelösungen bestimmend. Ein hoher Anteil an Mikrogel ist deshalb in den Fällen erwünscht, wo man aus giesstechnischen Gründen eine hohe Viskosität bevorzugt; auf viskositätserhöhende Zusätze kann in diesen Fällen verzichtet werden; ist in anderen Fällen eine niedrige Viskosität erwünscht, so wird man Gelatine mit niedrigem Mikrogelgehalt bevorzugen.

Die Fraktion der Peptide, d.h. der Spaltstücke der $\alpha$-Gelatine ist – in Bezug auf die physikalischen Eigenschaften – der am wenigsten wertvolle Bestandteil der Gelatine. Es hat sich gezeigt, dass die Peptide am Aufbau des Netzwerkes nicht teilnehmen, sondern weitgehend in Solform verbleiben. Sie schwächen damit die Netzstruktur und verzögern die Gelbildung. Langsam erstarrende Gelatinen enthalten damit stets einen grossen Anteil an Peptiden.

Es hat sich darüber hinaus gezeigt, dass die Gelbildung noch durch einen weiteren Faktor gestört werden kann: Natives Kollagen enthält ausschliesslich Aminosäuren in L-Konfiguration. Bei länger dauerndem Aufschluss kann eine allmähliche Racemisierung auftreten, wodurch ein Teil der L-Aminosäuren in die D-Form umgelagert wird. Bei grösseren Anteilen an D-Aminosäuren innerhalb der Ketten kann der Aufbau eines zusammenhängenden Netzwerkes aus sterischen Gründen gestört werden; die Erstarrungszeit der Lösungen wird dadurch erheblich verlängert. Gelatine mit möglichst kleinem Gehalt an D-Aminosäureresten ist daher anzustreben.

Bei zahlreichen Anwendungen von Gelatine auf dem Lebensmittel-, Pharma- und Photogebiet ist es höchst erwünscht, eine rasch erstarrende Gelatine zu haben, weil diese sich beispielsweise technologisch besonders bequem handhaben lässt und reproduzierbare Erzeugnisse von gleichbleibender Qualität ergibt. Die Erstarrungszeiten bekannter Gelatinen (gemessen bei 16°C und mit 2,5 g Gelatine in 1 dl Wasser) liegen weit oberhalb einer Minute, was in vielen Anwendungsfällen zu erheblichen Schwierigkeiten führt.

Es ist Aufgabe der Erfindung, die Herstellung einer Gelatine vorzuschlagen, deren Erstarrungszeit kleiner als diejenige bekannter Gelatinesorten ist und insbesondere unterhalb einer Minute liegt.

Die Aufgabe wird erfindungsgemäss durch die kennzeichnenden Merkmale des Patentanspruchs 1 gelöst.

Der Peptidgehalt liegt insbesondere unter 20 Gew.% und vorzugsweise auch unter 10 Gew.%.

Bevorzugte Gelatinen enthalten in der Regel 5 bis 15 Gew.% Mikrogel, 30 bis 70 Gew.% Oligomere der $\alpha$-Gelatine (n = 2–15), 20 bis 60 Gew.% $\alpha$-Gelatine und weniger als 25 Gew.% an Peptiden.

Gleichzeitig beträgt der Gehalt an Aminosäureresten mit D-Konformation in den gelbindenden Fraktionen höchstens 5 Gew.%.

Das Molekulargewicht der Bestandteile des Mikrogels liegt etwa zwischen $10^7$ und $10^8$, die Oligomeren der $\alpha$-Gelatine weisen Molekulargewichte im Bereich von etwa $10^5$ bis $10^6$ auf, während das Molekulargewicht der $\alpha$-Gelatine etwa

$9,5 \cdot 10^4$ beträgt und die Bruchstücke der $\alpha$-Gelatine (Peptide) ein solches von etwa $10^4$ bis $9 \cdot 10^4$ aufweisen.

Eine erfindungsgemäss hergestellte Gelatine zeichnet sich auch dadurch aus, dass sie eine hohe Viskosität, nämlich oberhalb 180 mP (millipoise) besitzt. Der bevorzugte Viskositätsbereich liegt zwischen 200 und 350 mP, vorzugsweise 200 bis 300 mP, kann jedoch noch über diesen Wert hinausreichen. Die angegebenen Viskositätswerte beziehen sich auf eine 10%ige Gelatinelösung (10 g Gelatine in 100 ml Wasser) bei 60°C. Für 6,67%ige Lösungen der Gelatine und bei 40°C beträgt die Viskosität etwa 8 bis 20 cP (80 bis 200 mP) (1 mP = $10^{-4}$ Pa·s).

Es ist ferner möglich, durch Vermischen geeigneter Gelatinefraktionen, die sich jeweils durch niedrigen Peptidgehalt bzw. hohe Viskosität auszeichnen, zu besonders kurzen Erstarrungszeiten zu gelangen. In entsprechenden Versuchen wurden beispielsweise Erstarrungszeiten von 2 bis 20 Sekunden bei 16°C und mit 2,5 g Gelatine in 1 dl Wasser erzielt.

Bei der Herstellung erfindungsgemässer Gelatine geht man am besten von alkalisch (z.B. mit wässrigen Calciumhydroxyd-Lösungen) in herkömmlicher Weise vorbehandeltem Rohmaterial aus, obwohl grundsätzlich auch in saurem Medium gearbeitet werden kann. Um die gewünschten kurzen Erstarrungszeiten zu erhalten, ist es wesentlich, dass man im Gegensatz zur bisher üblichen, schonenden Langzeit-Extraktion (mit längerer Verweilzeit des Extraktionswassers bzw. der sich stetig anreichernden Gelatinelösung bei niedriger Temperatur) eine Hochtemperatur-Kurzzeitreaktion ausführt. Hierunter versteht man, dass die Gelatine in einem Temperaturbereich (Sudtemperatur) zwischen etwa 80 und 100°C während einer Zeitdauer (Sudzeit) von etwa 5 bis 40 Minuten extrahiert oder ausgeschmolzen wird. Der pH-Wert (Sud-pH) liegt dabei zwischen etwa 6,5 und 7,0. Auch ein schwach alkalischer Sud-pH bis etwa 8,5 kann geeignet sein. Ein besonders vorteilhafter Bereich für die Sudtemperatur liegt zwischen etwa 80 und 90°C, eine besonders bevorzugte Sudzeit liegt zwischen etwa 20 und 40 Minuten.

Die auf diese Weise anfallenden, wässerigen Gelatinelösungen werden innerhalb von 1 bis 60 Minuten, vorzugsweise innerhalb 1 bis 5 Minuten auf Temperaturen von unterhalb 55°C, vorzugsweise unterhalb 45°C abgekühlt. Wichtig ist ausserdem eine kurzfristige Überführung in die Gelphase. Diese Überführung erfolgt bei den erfindungsgemässen Herstellungsverfahren innerhalb von 5 bis 45 Minuten, vorzugsweise innerhalb von 5 bis 15 Minuten.

Während somit nach den bekannten Verfahren über mehr als 2 Stunden und bei verhältnismässig niedrigen Temperaturen unterhalb 70°C extrahiert wird, ist es für die erfindungsgemässe Gelatine notwendig, sehr kurzzeitig unter Sicherstellung guter Wärmeübergangsverhältnisse bei höheren Temperaturen zu extrahieren. Durch Einsatz der Elektrophorese-Methode, welche die Feststellung der jeweiligen Gelatinezusammensetzung ermöglicht, kann das erfindungsgemässe Verfahren so geführt werden, dass zu bestimmten Zeiten in bestimmten Abzugsfolgen Gelatinen mit hohen Viskositäten bei gleichzeitiger Peptidarmut anfallen.

Die erfindungsgemäss hergestellten Gelatinen haben nicht nur eine besonders günstige Erstarrungszeit, sondern sind gleichzeitig aufgrund ihrer hohen Viskosität für die Anwendung in gewissen modernen Giesstechniken, z.B. Vorhangguss, deswegen besonders geeignet, weil ihnen keine viskositätserhöhenden Stoffe, z.B. zur Herstellung photographischer Schichten, beispielsweise Natriumzellulosesulfat, zugesetzt zu werden brauchen. In manchen Anwendungsfällen beeinträchtigen diese Zusatzstoffe nämlich die übrigen Eigenschaften des Gelatineerzeugnisses (Verfärbung).

Ein weiterer entscheidender Vorteil dieser Gelatine liegt darin, dass bei industriellen Verfahren der Gelatine-Trocknungsprozess abgekürzt werden kann. Unter Beibehaltung einer üblichen Trocknungsstrecke können beispielsweise die Temperaturen der Trocknungsluft angehoben werden, da der Schmelzpunkt der erfindungsgemässen Gelatine um 1 bis 3°C höher als herkömmlicher Gelatinesorten ist. Bei anderen industriellen Verfahren kann das Anblasen mit Kühlluft entfallen oder reduziert werden.

Beispiel 1
Knochenschrot aus schlachtfrischen Rohknochen wird durch Wasserentfettung schonend entfettet und unter milden Bedingungen in herkömmlicher Weise mazeriert. Anschliessend wird in der üblichen Weise alkalisch geäschert und neutralisiert. Ein erster Abzug wird bei einem Sud-pH-Wert von 6,5 und einer Temperatur von 72°C während 35 Minuten und ein zweiter Abzug bei gleichem pH-Wert bei 78°C während weiteren 20 Minuten extrahiert. Hierauf wird bei einem Sud-pH von 6,5 und bei 80°C der dritte Abzug entsprechend 50 bis 65% der Gesamtausbeute während 25 Minuten in einem herkömmlichen Rührkessel extrahiert. Ein teilkontinuierliches Extraktionsverfahren führt zu denselben Ergebnissen. Die anfallende Gelatinelösung wird innerhalb 3 bis 5 Minuten auf 50°C herabgekühlt und im Verlauf von etwa 10 Minuten in die Gelphase überführt.

Patentansprüche

1. Verfahren zur Herstellung einer Gelatine mit einer Viskosität oberhalb 180 mP, vorzugsweise zwischen 200 und 350 mP (10% wässrige Gelatinelösung bei 60°C) und mit einem Gehalt an Mikrogel, Oligomeren der α-Gelatine, α-Gelatine und Bruchstücken der α-Gelatine (Peptiden), wobei der Gehalt an Bruchstücken der α-Gelatine (Peptide) mit einem Molekulargewicht von höchstens $9.10^4$ 1- bis 25 Gewichtsprozent beträgt, dadurch gekennzeichnet, dass die Gelatine aus in herkömmlicher Weise alkalisch vorbehandeltem Rohmaterial in einem Temperaturbereich (Sudtemperatur) zwischen 80 und 100°C während einer Zeitdauer (Sudzeit) von 5 bis 40 Minuten bei einem pH-Wert (Sud-pH) zwischen 6,5 und 7,0 ausgeschmolzen wird, dass die anfallende Gelatinelösung während 1 bis 60 Minuten, vorzugsweise 1 bis 5 Minuten, auf eine Temperatur unterhalb 55°C, insbesondere unterhalb 45°C abgekühlt wird, dass die Gelatine innerhalb vn 5 bis 45 Minuten, vorzugsweise 5 bis 15 Minuten, von der Sol- in die Gelphase übergeführt wird.

2. Verfahren nach Anspruch 1, dadurch gekennzeichnet, dass die Sudtemperatur zwischen 80 und 90°C liegt.

3. Verfahren nach Anspruch 1 oder 2, dadurch gekennzeichnet, dass die Sudzeit 20 bis 40 Minuten beträgt.

Claims

1. Process for the preparation of a gelatine having a viscosity greater than 180 mP, preferably between 200 and 350 mP (10% aqueous gelatine solution at 60°C) and a content of microgel, oligomers of α-gelatine, α-gelatine and fragments of α-gelatine (peptides), the content of fragments of α-gelatine (peptides) having a molecular weight of a maximum of $9 \times 10^4$ amounting from 1 to 25% by weight, characterised in that the gelatine is melted out of raw material, which has been pretreated in a conventional manner with alkali, in a temperature range (boiling temperature) between 80 and 100°C during a period of time (extraction time) of 5 to 40 minutes at a pH value (boiling pH) between 6.5 and 7.0, that the gelatine solution obtained is cooled down, during 1 to 60 minutes, preferably 1 to 5 minutes, to a temperature below 55°C, expecially below 45°C, that the gelatine is converted from the sol phase into the gel phase within 5 to 45 minutes, preferably 5 to 15 minutes.

2. Process according to Claim 1, characterised in that the boiling temperature is between 80 and 90°C.

3. Process according to claim 1 or 2, characterised in that the extraction time is 20 to 40 minutes.

Revendications

1. Procédé de fabrication d'une gélatine, ayant une viscosité superieure à 180 mP, de préférence entre 200 et 350 mP (solution aqueuse de gélatine à 10% à 60°C) et contenant un microgel, des oligomères de la gélatine α, de la gélatine α et des fragments de la gélatine α (peptides), la teneur en fragments de la gélatine α (peptides) ayant une masse moléculaire au plus égale à $9.10^4$ faisant de 1 à 25% en poids, caractérisé en ce que la gélatine est fondue à partir d'une matière première prétraitée par un alcali d'une manière classique dans un domaine de températures (température d'extraction) entre 80 et 100°C pendant une durée (temps d'extraction) de 5 à 40 minutes à un pH (pH d'extraction) entre 6,5 et 7,0, que la solution de gélatine qui se forme est refroidie pendant 1 à 60 minutes, de préférence 1 à 5 minutes, à une température inférieure à 55°C, en particulier inférieure à 45°C, que la gélatine est transformée en 5 à 45 minutes, de préférence en 5 à 15 minutes, de la phase sol en la phase gel.

2. Procédé suivant la revendication 1, caractérisé en ce que la température d'extraction est entre 80 et 90°C.

3. Procédé suivant la revendication 1 ou 2, caractérisé en ce que le temps d'extraction est de 20 à 40 minutes.